# EUROPEAN PATENT APPLICATION

(11) **EP 4 624 767 A1**
(43) Date of publication of application: **01.10.2025**
(21) Application number: 24205303.1
(22) Date of filing: 08.10.2024
(51) Int. Cl.: F16B 2/24, F16B 2/22, F16M 11/04, F16M 11/14, F16M 11/16, F16M 11/22, F16M 13/02, H04N 5/64, F16B 5/06

(54) **ELASTIC PUSH-IN LOCKING ASSEMBLY AND DISPLAY SCREEN**

(30) Priority: 27.03.2024 CN 202420612969 U; 01.04.2024 CN 202420655304 U
(71) Applicant: Shanghai Sansi Electronic Engineering Co. Ltd., Shanghai 201100 (CN); Shanghai Sansi Technology Co. Ltd., Shanghai 201306 (CN); Jiashan Sansi Optoelectronic Technology Co. Ltd., Zhejiang 314113 (CN); Pujiang Sansi Optoeletronic Technology Co. Ltd., Jinhua, Zhejiang 322200 (CN); Zhejiang Puzhao Photoelectric Technology Co., Ltd., Jinhua, Zhejiang 322200 (CN)
(72) Inventor: CHEN, Chungen, Shanghai, 201100 (CN); ZHAO, Wenya, Shanghai, 201100 (CN); FU, Yi, Shanghai, 201100 (CN); WANG, Biao, Shanghai, 201100 (CN); XU, Li, Shanghai, 201100 (CN); MIU, Luping, Shanghai, 201100 (CN)
(74) Representative: Canzler & Bergmeier Patentanwälte Partnerschaft mbB

(57) **Abstract**

An elastic push-in locking assembly (1) is used to detachably connect a stationary body (2) with a mounting body (3). It includes a mounting column (11) with a first end fixed to the stationary body, a fixed concave platform (12) provided on the mounting body, and an elastic clamping device including a fixing part and an elastic clamping part integrally moulded with the fixing part. The elastic clamping part is adapted to a second end of the mounting column, and the elastic clamping device is fixed in the fixed concave platform through the fixing part. When the second end of the mounting column is inserted into the elastic clamping part, the elastic deformation of the elastic clamping part forms an elastic constraint on the second end of the mounting column, making the stationary body and the mounting body in a connected state. When the mounting column is pulled out, the stationary body and the mounting body are in a separated state.

## Description

### TECHNICAL FIELD

The present disclosure relates to the technical field of display module fixing structure, in particular to an elastic push-in locking assembly as well as a display screen.

### BACKGROUND

Large screen displays, due to their high brightness, long lifespan, wide viewing angle, and other advantages, are now widely used in both indoor and outdoor spaces of large shopping malls, commercial streets and other commercial settings.

To meet the growing demand for enhanced visual stimulation among users, the dimensions of display screens have been continuously expanding. In response to this trend towards larger display modules, the corresponding fixing mechanisms for these modules typically adopt a locked-in fixing mode. This approach indeed ensures stability during installation, yet its shortcomings are obvious: firstly, the disassembly process is difficult because it cannot be removed from the front side of the display module for maintenance. Secondly, since the traditional fixing mechanism adopts a locked-in method, it is susceptible to two primary consequences when external forces cause deformation or relative positional shifts in the display module or its housing chassis. In minor cases, the traditional fixing mechanism may deform alongside the display module or housing chassis, leading to jamming and thereby presenting significant challenges for subsequent maintenance and disassembly operations. In severe scenarios, the traditional fixing mechanism may undergo direct deformation and cease to function effectively, failing to secure the display module and potentially resulting in its detachment, thus posing a safety hazard.

### SUMMARY OF THE INVENTION

In view of the problems in the related technology, the present disclosure provides an elastic push-in locking assembly and a display screen, to solve the problems in the prior art where the fixing mechanism corresponding to the display module is inconvenient for assembly and disassembly, does not support front maintenance, and cannot adapt to displacement of the display module or its housing chassis.

In order to solve the above technical problems, the present disclosure provides an elastic push-in locking assembly for detachably connecting a stationary body with a mounting body, including a mounting column, a fixed concave platform, and an elastic clamping device. A first end of the mounting column is connected to the stationary body. The fixed concave platform is provided on the mounting body. The elastic clamping device includes a fixing part and an elastic clamping part integrally molded with the fixing part, and the elastic clamping part is adapted to the second end of the mounting column. The elastic clamping device is connected in the fixed concave platform through the fixing part. Upon the second end of the mounting column being inserted into the elastic clamping part, the elastic deformation of the elastic clamping part forms an elastic constraint on the other end of the mounting column, making the stationary body and the mounting body in a connected state. Upon the mounting column being pulled out, the stationary body and the mounting body are in a separated state. In the connected state, the elastic constraint of the elastic clamping device on the mounting column allows a certain degree of displacement between the mounting column and the elastic clamping part, thereby reducing the impact of external forces on the stationary body and the mounting body.

As a more preferred way, the elastic clamping device is a claw device, the fixing part includes a base and multiple supporting feet, and the elastic clamping part forms an elastic clamping cavity inside. One end of each of the multiple supporting feet is fixed to the base, the other end extends toward the mounting body, and the multiple supporting feet are arranged symmetrically around the center of the base. The elastic clamping part is fixed to the base and extends toward the stationary body. The claw device is clamped into the fixed concave platform through the multiple supporting feet. One end of each of the multiple supporting feet is in contact with the bottom of the fixed concave platform and is restricted by the side wall of the fixed concave platform. The multiple supporting feet elevate the base and create a certain clearance between the base and the bottom of the fixed concave platform. When the second end of the mounting column is inserted into the elastic clamping cavity, the stationary body and the mounting body are in a connected state. When the mounting column is pulled out, the stationary body and the mounting body are in a separated state. The mounting column is more favorably and conveniently set in the elastic clamping cavity through an accommodating space, a tightening opening and a guiding opening. In the connected state, when the relative angle between the stationary body and the mounting body is deflected, due to the clearance between the base and the fixed concave platform, the elastic clamping cavity deforms, driving the base to deflect at a certain angle towards the side of the fixed concave platform, which accommodates the assembly of the elastic clamping cavity with the mounting column, thereby preventing excessive deformation that could otherwise lead to connection failure, and further enhancing the stability of the connection.

As a more preferred way, the elastic clamping cavity includes an accommodating space, a tightening opening and a guiding opening. The second end of the mounting column includes a convex head adapted to the accommodating space and a waisted groove adapted to the tightening opening. When the second end of the mounting column is inserted into the elastic clamping cavity, the convex head abuts against the guiding opening and applies a certain pressure to the elastic clamping cavity, causing the tightening opening to be propped open under the pressure. The convex head passes through the tightening opening and is placed in the accommodation space. The tightening opening is sleeved on the waisted groove. When the second end of the mounting column is pulled out of the elastic clamping cavity, the convex head applies pressure to the tightening opening, causing the tightening opening to be propped open. As the convex head passes through the tightening opening, the mounting column is withdrawn from the cavity.

As a more preferred way, the elastic push-in locking assembly further includes multiple elastic pieces. One end of each of the multiple elastic pieces is fixed to the base, and the multiple elastic pieces are arranged symmetrically around the center of the base. The elastic clamping cavity is enclosed by the multiple elastic pieces, and the multiple elastic pieces are provided to collectively enclose the accommodation space, the tightening opening and the guiding opening of the elastic clamping cavity, while the multiple symmetrically disposed elastic pieces can apply a uniform elastic force to the convex head when the mounting column is inserted into the elastic clamping cavity or pulled out from the elastic clamping cavity, so as to ensure that the mounting column is subjected to a balanced force. In addition, the multiple elastic pieces have a simple structure and are convenient to manufacture.

As a more preferred way, each of the multiple elastic pieces includes an accommodating part and a tightening part. One end of the accommodating part is fixed on the base, one end of the tightening part is integrally molded on the other end of the accommodating part and extends toward the inner side of the elastic clamping cavity. Multiple accommodating parts enclose the accommodation space of the elastic clamping cavity, and multiple tightening parts enclose the tightening opening of the elastic clamping cavity.

As a more preferred way, each of the multiple elastic pieces further include a guiding part, which is integrally molded into the other end of the tightening part and extends towards the outside of the elastic clamping cavity. The multiple guiding parts enclose a guiding opening of the elastic clamping cavity. When the second end of the mounting column is inserted into the elastic clamping cavity, the convex head abuts against the guiding part of the multiple elastic pieces and applies a certain pressure to the multiple elastic pieces. The guiding part expands outward under the pressure, which causes the tightening opening to be propped open, then the convex head passes through the tightening opening and is located in the accommodating space, thereby completing the connection of the mounting column to the elastic clamping cavity. When the second end of the mounting column is pulled out of the elastic clamping cavity, the convex head applies pressure to the tightening part of the multiple elastic pieces, causing the tightening opening to be propped open. As the convex head passes through the tightening opening, the mounting column is withdrawn from the cavity.

As a more preferred way, the outer contour of each of the multiple supporting feet is shaped like the Chinese character "JL", and the protrusions of the multiple supporting feet face the stationary body. When the claw device is clamped into the fixed concave platform by the multiple supporting feet, the other ends of the multiple supporting feet are compressed, and the side wall of the fixed concave platform exerts an elastic force to the multiple supporting feet toward the center of the base. The elastic forces received by the multiple supporting feet are balanced with each other, and these elastic forces make the connection between the supporting feet and the fixed concave platform even more secure.

As a more preferred way, the elastic clamping device is a rectangular elastic member, which includes two clamping elastic rods connected end to end. The two clamping elastic rods are parallel to each other, the elastic clamping part is a clamping seam between the two clamping elastic rods, the fixing part is an end section of the rectangular elastic member, two bayonets are correspondingly provided on the inner wall of the fixed concave platform, and the two ends of the rectangular elastic member are respectively inserted into the bayonets. When the second end of the mounting column is inserted into the clamping seam, the mounting column abuts against the clamping elastic rods and applies a certain pressure to the clamping elastic rods. The clamping seam is propped open under the pressure, allowing the mounting column to pass through and be limited within the clamping seam, so that the mounting body and the stationary body are in a connected state. When the mounting column is pulled out of the clamping seam, the stationary body and the mounting body are in a separated state.

As a more preferred way, the rectangular elastic member is designed in an arch shape, with its protruding part in contact with the inner wall of the fixed concave platform. The rectangular elastic member is limited by the inner wall of the fixed concave platform to better mount the rectangular elastic member.

The present disclosure further provides a display screen. The display screen includes the above elastic push-in locking assembly, one or more display modules and a mounting chassis for mounting the display modules. The elastic push-in locking assembly is fixed to the display modules, and the display modules are detachably mounted on the mounting chassis by the elastic push-in locking assembly.

As described above, the elastic push-in locking assembly and the display screen of the present disclosure have the following beneficial effects: when the elastic push-in locking assembly of the present disclosure is in use, the second end of the mounting column inserting into the elastic clamping part, the elastic deformation of the elastic clamping part forms an elastic constraint on the second end of the mounting column, making the stationary body and the mounting body in a connected state. When the mounting column is pulled out, the stationary body and the mounting body are in a separated state. In the connected state, the elastic constraint of the elastic clamping device on the mounting column allows a certain degree of displacement between the mounting column and the elastic clamping part, thereby reducing the impact of the external forces on the stationary body and the mounting body, and preventing a connection failure that could result from excessive deformation between the stationary body and the mounting body. It can be seen that the elastic push-in locking assembly of the present disclosure realizes a detachable connection between the stationary body and the mounting body through mutually adapted elastic clamping part and the mounting column structure, which is very convenient and fast. Moreover, the elastic constraint of the elastic clamping part limits the movement of the mounting column and allows a certain degree of displacement between the mounting column and the elastic clamping part, which enables the structure to cope with more unexpected situations.

The display screen of the present disclosure uses the above elastic push-in locking assembly to detachably mount the display modules on the mounting chassis. Firstly, this detachable mounting method facilitates the installation of the display modules, and simultaneously, it also makes it more convenient to access the front side of the display modules for front maintenance. Secondly, when the display module or its mounting chassis is subjected to a certain deformation or relative position change due to external forces, the elastic clamping device adapts to the assembly between the elastic clamping part and the mounting column through adaptive elastic deformation, ensuring a stable connection between the display module and the mounting chassis, preventing the elastic clamping part and the mounting column from jamming with each other, which would cause significant difficulties in subsequent maintenance and disassembly. Additionally, it also avoids the potential safety hazard of the display module falling off the mounting chassis.

In summary, the elastic push-in locking assembly and the display screen of the present disclosure realizes the rapid assembly and disassembly of the display module and the mounting chassis through a detachable structural design and the elastic clamping part that can adapt to the displacement and deflection of the display module or the mounting chassis, which not only facilitates a quick and convenient operation but also supports front maintenance. Additionally, it ensures a stable connection between the display module and the mounting chassis when subjected to external forces, thereby addressing the issues in existing technologies where the corresponding fixing mechanisms for display modules are inconvenient to assemble and disassemble, do not support front maintenance, and cannot adapt to displacement and deflection of the display module or chassis.

### DESCRIPTION OF DRAWINGS

FIG. 1 shows a schematic diagram of an elastic push-in locking assembly in Embodiment 1 of the present disclosure.
FIG. 2 shows a schematic diagram of a mounting column of an elastic push-in locking assembly in Embodiment 1 of the present disclosure.
FIG. 3 shows a schematic diagram of a claw device of an elastic push-in locking assembly in Embodiment 1 of the present disclosure.
FIG. 4 shows a front schematic view of an elastic push-in locking assembly in Embodiment 1 of the present disclosure.
FIG. 5 shows a sectional view in the direction A-A of FIG. 4.
FIG. 6 shows a schematic diagram of the deflection and displacement of a base of an elastic push-in locking assembly when a stationary body is deflected relative to a mounting body in Embodiment 1 of the present disclosure.
FIG. 7 shows an exploded schematic diagram of an elastic push-in locking assembly in Embodiment 2 of the present disclosure.
FIG. 8 shows a schematic diagram of an elastic push-in locking assembly in Embodiment 2 of the present disclosure.

### Reference signs

- 1: Elastic push-In locking assembly
- 11: Mounting column
- 111: Convex head
- 112: Waisted groove
- 113: Convex part
- 114: Positioning column
- 12: Fixed concave platform
- 121: Bayonet
- 13: Claw device
- 131: Base
- 132: Elastic piece
- 132a: Accommodating part
- 132b: Tightening part
- 132c: Guiding part
- 133: Supporting foot
- 134: Elastic clamping cavity
- 134a: Accommodating space
- 134b: Tightening opening
- 134c: Guiding opening
- 14: Rectangular elastic member
- 141: Clamping elastic rod
- 142: Clamping seam
- 2: Stationary body
- 3: Mounting body

### DETAILED DESCRIPTION

The specific embodiments are described below to illustrate the implementation of the present disclosure, and those skilled in the art can easily understand other advantages and effects of the present disclosure from the content disclosed in this specification.

It should be noted that the structures, proportions, sizes, etc. shown in the accompanying drawings are only intended to complement the content disclosed in the specification for the understanding and reading by those familiar with the technology, and they are not conditions to limit the implementation of the present disclosure. Any modification of the structure, change in proportion, or adjustment of size, as long as they do not compromise the effectiveness and purpose of this invention, should still be considered within the scope of the technical contents disclosed in the present disclosure. The following detailed description should not be considered limiting, and the scope of the embodiments of the present application is only limited by the patent claims published. The terms used herein are only intended to describe specific implementations, rather than to limit the scope of this application. Terms related to space, such as "up", "down", "left", "right", "below", "under", "lower", "above", and "upper", can be used in the text to illustrate the relationship between one component or feature and another component or feature shown in the drawings.

In the present disclosure, unless otherwise specified and limited, terms such as "installation", "connection", "linkage", "fixation", "retention" and the like should be broadly understood, for example, it can be a fixed connection, a detachable connection, or an integral connection; it can be a mechanical connection, or an electrical connection; it can be a direct connection, or an indirect connection through an intermediate medium, and it also can be communication inside two components, or those skilled in the art, the specific meanings of the above terms in the present disclosure can be understood according to the specific situation.

Furthermore, in the description, the singular forms "a," "an," and "the" include plural referents, unless otherwise indicated by the context. It should be further understood that the terms "including" and "comprising" indicate the presence of the described features, operations, elements, components, items, types, and/or groups, but do not exclude the presence, occurrence, or addition of one or more other features, operations, elements, components, items, types, and/or groups. The terms "or" and "and/or" used here are interpreted as inclusive, meaning any one or any combination. Therefore, "A, B, or C" or "A, B and/or C" means "any one or more of the following: A; B; C; A and B; A and C; B and C; A, B and C". Only when the combination of elements, functions, or operations inherently repel each other in some way, will the exceptions to this definition be allowed.

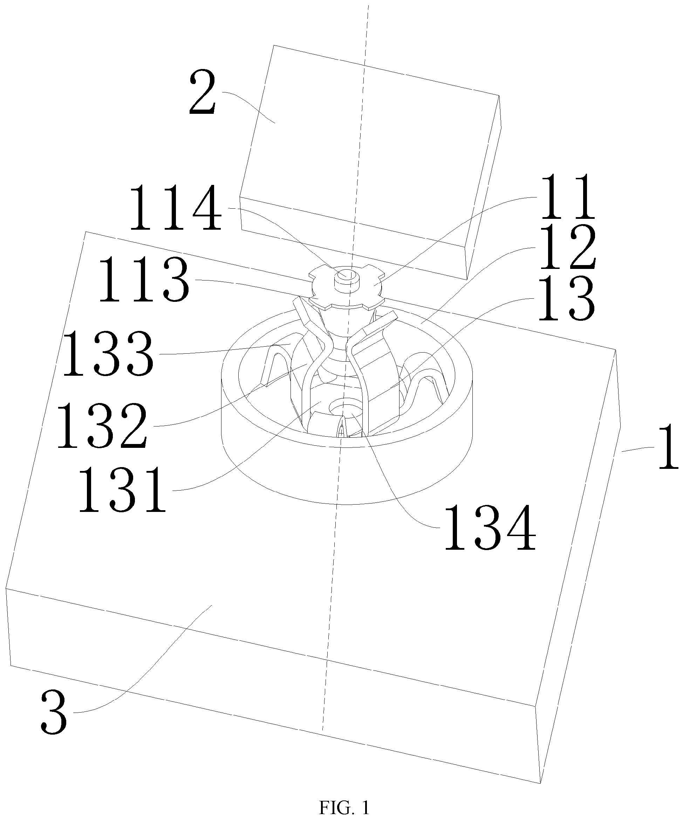

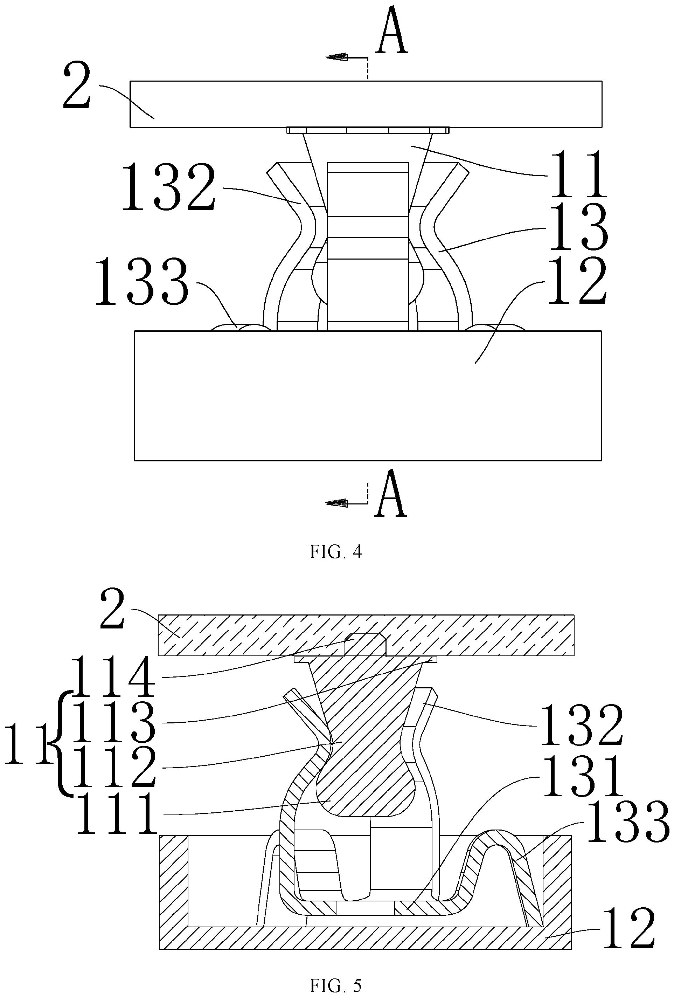

As shown in Figure 1 to 6, the present disclosure provides an elastic push-in locking assembly 1 for detachably connecting a stationary body 2 with a mounting body 3, including a mounting column 11, a fixed concave platform 12, and an elastic clamping device.

A first end of the mounting column 11 is connected to the stationary body 2.

The fixed concave platform 12 is provided on the mounting body 3.

The elastic clamping device includes a fixing part and an elastic clamping part integrally molded with the fixing part, and the elastic clamping part is adapted to a second end of the mounting column 11. The elastic clamping device is connected in the fixed concave platform 12 through the fixing part.

The present disclosure will be further described in relation to the following specific applications to better introduce the elastic push-in locking assembly 1: when the elastic push-in locking assembly 1 of the present disclosure is in use, the second end of the mounting column 11 is inserted into the elastic clamping part, the elastic deformation of the elastic clamping part forms an elastic constraint on the second end of the mounting column 11, making the stationary body 2 and the mounting body 3 in a connected state. When the mounting column 11 is pulled out, the stationary body 2 and the mounting body 3 are in a separated state. In the connected state, the elastic constraints of the elastic clamping device on the mounting column 11 permit a certain degree of displacement between the mounting column 11 and the elastic clamping part, which mitigates the impact of external forces on the stationary body 2 and the mounting body 3, thereby preventing a connection failure that could result from excessive deformation between the stationary body 2 and the mounting body 3. It can be seen that the elastic push-in locking assembly 1 of the present disclosure realizes a detachable connection between the stationary body 2 and the mounting body 3 through the mutually adapted elastic clamping part and the mounting column 11, which is very convenient and fast. Moreover, the elastic constraints of the elastic clamping part limit the mounting column 11 and permit a certain degree of displacement between the mounting column 11 and the elastic clamping part, which is able to cope with more unexpected situations.

Furthermore, in this embodiment, the mounting column 11 is made of a metal material, as metal materials have excellent strength as well as toughness. Furthermore, the mounting column 11 of this embodiment can be made of copper.

Furthermore, in this embodiment, as shown in Figures 1 to 2, a first end of the mounting column 11 is provided with a convex part 113, a positioning column 114 is provided on the convex part 113, and the stationary body 2 is provided with a positioning hole adapted to the positioning column 114. The positioning column 114 can be set in the positioning hole and connected to the stationary body 2 by threaded connection or welding or the like, at which time the convex part 113 abuts against the stationary body 2.

Embodiment 1 is shown in Figures 1 to 6. The elastic clamping device is a claw device 13, the fixing part includes a base 131 and multiple supporting feet 133, and the elastic clamping part forms an elastic clamping cavity 134 inside. One end of each of the multiple supporting feet 133 is fixed to the base 131, while the other end extends toward the mounting body 3, and the multiple supporting feet 133 are arranged symmetrically around the center of the base 131. The elastic clamping part claw device is fixed to the base 131 and extends toward the stationary body 2. The claw device 13 is clamped into the fixed concave platform 12 through the multiple supporting feet 133. One end of each of the multiple supporting feet 133 is in contact with the bottom of the fixed concave platform 12 and is restricted by the side wall of the fixed concave platform 12. The multiple supporting feet 133 elevate the base 131 and create a certain clearance between the base 131 and the bottom of the fixed concave platform 12. When the second end of the mounting column 11 is inserted into the elastic clamping cavity 134, the stationary body 2 and the mounting body 3 are in a connected state. When the mounting column 11 is pulled out, the stationary body 2 and the mounting body 3 are in a separated state. The mounting column 11 is more favorably and conveniently set in the elastic clamping cavity 134 through an accommodating space 134a, a tightening opening 134b and a guiding opening 134c. In the connected state, when the relative angle between the stationary body 2 and the mounting body 3 is deflected, due to the clearance between the base 131 and the fixed concave platform 12, the elastic clamping cavity 134 deforms, driving the base 131 to deflect at a certain angle towards the side of the fixed concave platform 12, allowing the elastic clamping cavity 134 to fit with the mounting column 11, thereby preventing excessive deformation that could lead to connection failure, and further enhancing the stability of the connection.

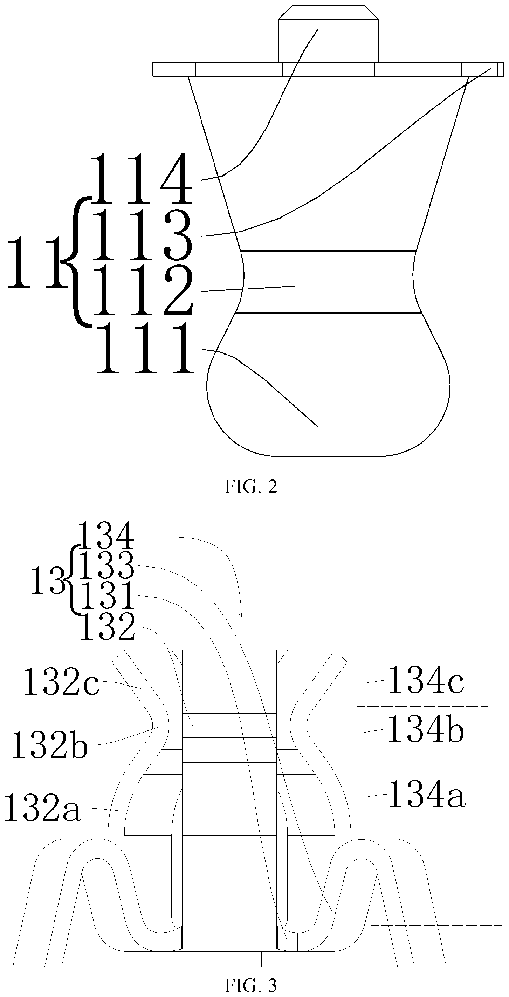

In this embodiment, as shown in Figure 3, the elastic clamping cavity 134 includes an accommodating space 134a, a tightening opening 134b and a guiding opening 134c. The second end of the mounting column 11 includes a convex head 111 adapted to the accommodating space 134a and a waisted groove 112 adapted to the tightening opening 134b. When the second end of the mounting column 11 is inserted into the elastic clamping cavity 134, the convex head 111 abuts against the guiding opening 134c and applies a certain pressure to the elastic clamping cavity 134, causing the tightening opening 134b to expand under the pressure. The convex head 111 passes through the tightening opening 134b and is placed in the accommodation space 134a. The tightening opening 134b is sleeved on the waisted groove 112. When the second end of the mounting column 11 is pulled out of the elastic clamping cavity 134, the convex head 111 applies pressure to the tightening opening 134b, causing the tightening opening 134b to expand. As the convex head 111 passes through the tightening opening 134b, the mounting column 11 is withdrawn from the cavity.

In this embodiment, as shown in Figure 3, the elastic push-in locking assembly 1 further includes multiple elastic pieces 132. One end of each of the multiple elastic pieces 132 is fixed to the base 131, and the multiple elastic pieces 132 are arranged symmetrically around the center of the base 131. The elastic clamping cavity 134 is enclosed by the multiple elastic pieces 132, and the multiple elastic pieces 132 are provided to collectively enclose the accommodation space 134a, the tightening opening 134b and the guiding opening 134c of the elastic clamping cavity 134, while the multiple symmetrically disposed elastic pieces 132 can apply a uniform elastic force to the convex head 111 when the mounting column 11 is inserted into or pulled out of the elastic clamping cavity 134, so as to ensure that the mounting column 11 is subjected to a balanced force. In addition, the multiple elastic pieces 132 have a simple structure and are convenient to manufacture.

In this embodiment, as shown in Figure 3, each of the multiple elastic pieces 132 includes an accommodating part 132a and a tightening part 132b. One end of the accommodating part 132a is fixed on the base 131, while one end of the tightening part 132b is integrally molded into the other end of the accommodating part 132a and extends inwardly toward the elastic clamping cavity 134. Multiple accommodating parts 132a enclose the accommodation space 134a of the elastic clamping cavity 134, and multiple tightening parts 132b enclose the tightening opening 134b of the elastic clamping cavity 134.

In this embodiment, as shown in Figure 3, the multiple elastic pieces 132 further include a guiding part 132c, which is integrally molded into the other end of the tightening part 132b and extends towards the outside of the elastic clamping cavity 134. Multiple guiding parts 132c enclose a guiding opening 134c of the elastic clamping cavity 134. When the second end of the mounting column 11 is inserted into the elastic clamping cavity 134, the convex head 111 abuts against the guiding part 132c of the multiple elastic pieces 132 and applies a certain pressure to the multiple elastic pieces 132. The guiding part 132c is propped open under the pressure, which in turn causes the tightening opening 134b to expand, then the convex head 111 passes through the tightening opening 134b and is placed into the accommodating space 134a, thereby completing the connection of the mounting column 11 to the elastic clamping cavity 134. When the second end of the mounting column 11 is pulled out of the elastic clamping cavity 134, the convex head 111 applies pressure to the tightening part 132b of the multiple elastic pieces 132, causing the tightening opening 134b to expand. As the convex head 111 passes through the tightening opening 134b, the mounting column 11 is withdrawn from the cavity.

In this embodiment, as shown in Figure 3, the outer contour of each of the supporting feet 133 is shaped like the Chinese character "JL", and the protrusions of the multiple supporting feet 133 face the side of the stationary body 2. When the claw device 13 is clamped into the fixed concave platform 12 by the multiple supporting feet 133, the other end of the multiple supporting feet 133 is compressed, and the side wall of the fixed concave platform 12 exerts an elastic force to the multiple supporting feet 133 toward the center of the base 131. The elastic forces received by the multiple supporting feet 133 are balanced with each other, and these elastic forces make the connection between the supporting feet 133 and the fixed concave platform 12 even more secure.

In this embodiment, the claw device 13 is made of metal material. The metal material exhibits excellent toughness, which ensures that the claw device 13 can undergo stable deformation when subjected to external forces and return to its original shape when the external forces cease, thereby facilitating the detachable connection between the mounting column 11 and the elastic clamping cavity 134. Furthermore, the mounting column 11 can be made of copper.

In this embodiment, as shown in Figure 1, the claw device 13 includes three elastic pieces 132. The three elastic pieces 132 can better clamp the mounting column 11 and balance the force on the mounting column 11 to ensure clamping stability.

In this embodiment, as shown in Figure 1, the claw device 13 includes three supporting feet 133. The three supporting feet 133 are able to effectively help the claw device 13 to be set within the fixed concave platform 12, better balance the elastic force exerted by the side wall of the fixed concave platform 12 to the supporting feet 133 toward the center of the base 131, and ensure that the claw device 13 and the fixed concave platform 12 can be more firmly connected.

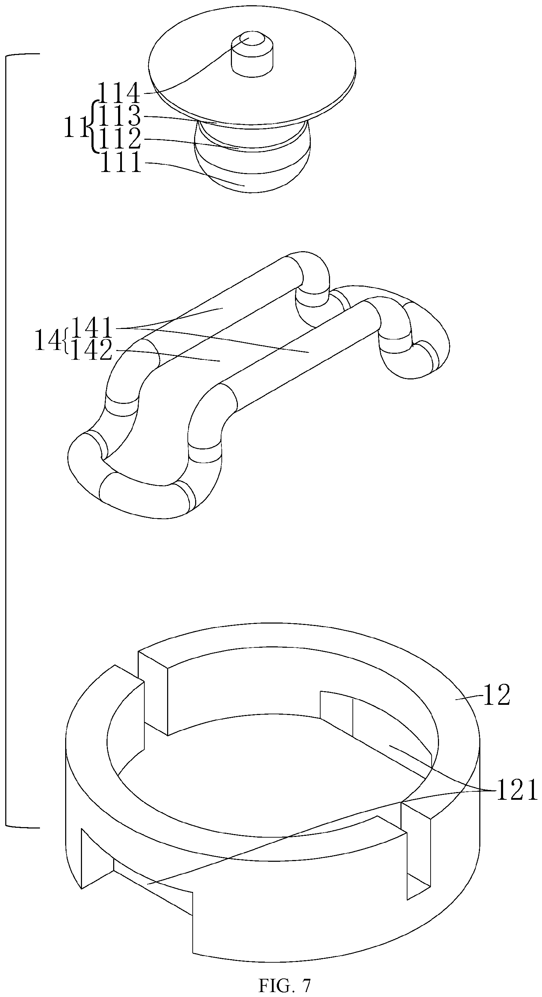

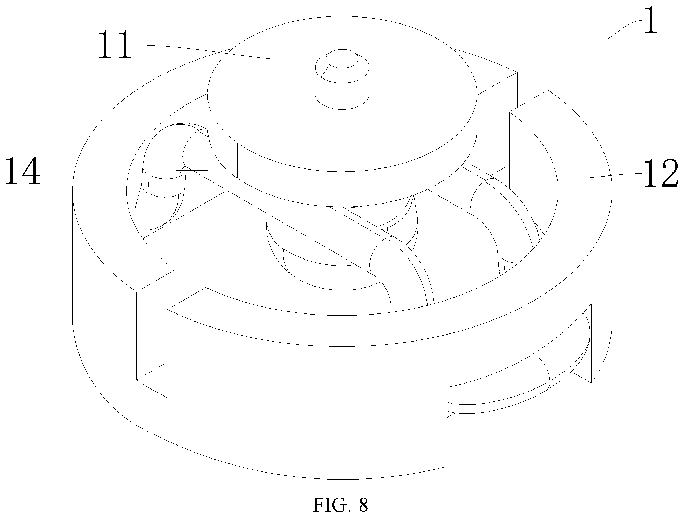

Embodiment 2 is shown in Figures 7 and 8. The elastic clamping device is a rectangular elastic member 14, which includes two clamping elastic rods 141 connected end to end. The two clamping elastic rods 141 are parallel to each other, the elastic clamping part is a clamping seam 142 between the two clamping elastic rods 141, the fixing part is an end section of the rectangular elastic member 14, two bayonets 121 are correspondingly provided on the inner wall of the fixed concave platform 12, and the two ends of the rectangular elastic member 14 are respectively inserted into the bayonets 121. When the second end of the mounting column 11 is inserted into the clamping seam 142, the mounting column 11 abuts against the clamping elastic rods 141 and applies a certain pressure to the clamping elastic rods 141. The clamping seam 142 is propped open under the pressure, allowing the mounting column 11 to pass through and be limited within the clamping seam 142, so that the mounting body 3 and the stationary body 2 are in a connected state. When the mounting column 11 is pulled out of the clamping seam 142, the stationary body 2 and the mounting body 3 are in a separated state.

In this embodiment, as shown in Figure 7, the rectangular elastic member 14 is designed in an arch shape, with its protruding part in contact with the inner wall of the fixed concave platform 12. The rectangular elastic member 14 is limited by the inner wall of the fixed concave platform 12 to better mount the rectangular elastic member 14.

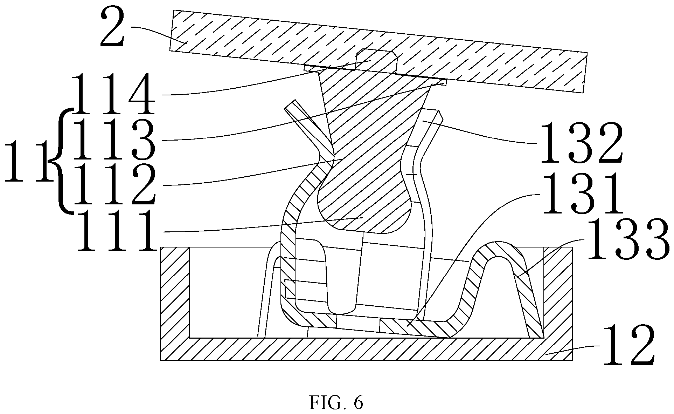

In this embodiment, as shown in Figure 6, the second end of the mounting column 11 includes a convex head 111 and a waisted groove 112 adapted to the clamping seam 142. When the second end of the mounting column 11 is inserted into the clamping seam 142, the convex head 111 abuts against the clamping elastic rods 141 and applies a certain pressure to the clamping elastic rods 141, causing the clamping seam 142 to expand under the pressure. The convex head 111 passes through the seam and is limited below the rectangular elastic member 14. The two clamping elastic rods 141 abut against the waisted groove 112 and limit the waisted groove 112 by the clamping seam 142. When the second end of the mounting column 11 is pulled out of the clamping seam 142, the convex head 111 applies pressure to the clamping elastic rods 141, causing the clamping seam 142 to expand. As the convex head 111 passes through the clamping seam 142, the mounting column 11 is withdrawn.

The present disclosure further provides a display screen. The display screen includes the above elastic push-in locking assembly 1, one or more display modules, and a mounting chassis for mounting the display modules. The elastic push-in locking assembly 1 is fixed to the display modules, and the display modules are detachably mounted on the mounting chassis by the elastic push-in locking assembly 1.

In order to better introduce the display screen of the present disclosure, the following specific application is combined to explain: the display screen of the present disclosure uses the above elastic push-in locking assembly 1 to enable the display modules to be detachably mounted on the mounting chassis. Firstly, this detachable mounting method facilitates the installation of the display modules, and simultaneously, it also makes it more convenient to access the front side of the display modules for front maintenance. Secondly, when the display module or its mounting chassis is subjected to a certain deformation or relative position change due to external force, the elastic clamping device adapts to the assembly between the elastic clamping part and the mounting column 11 through adaptive elastic deformation, ensuring a stable connection between the display module and the mounting chassis, preventing the elastic clamping part and the mounting column 11 from jamming with each other, which would cause significant difficulties in subsequent maintenance and disassembly. Additionally, it also avoids the potential safety hazard of the display module falling off the mounting chassis.

In summary, the elastic push-in locking assembly 1 of the present disclosure has the following advantages:

Through the mutual adaptation of the elastic clamping device and the mounting column 11, the stationary body 2 and the mounting body 3 are detachably connected with each other, which is convenient and fast.

The elastic restraint of the elastic clamping device on the mounting column 11 allows a certain degree of displacement of the mounting column 11, providing a degree of flexibility that helps to cope with unexpected situations.

In the connected state, the elastic clamping device can reduce the external impact on the stationary body 2 and the mounting body 3, reducing the risk of connection failure.

The mounting column 11 is made of a metallic material, such as copper, which improves the stability and durability of the structure due to the excellent strength and toughness of metallic materials.

When the relative angle between the stationary body 2 and the mounting body 3 is deflected, the elastic clamping part can deform to adapt to the assembly, thereby improving the connection stability.

The rectangular elastic member 14 in Embodiment 2 provides another type of elastic clamping method, which achieves the insertion and extraction of the mounting column 11 through the clamping seam 142 between the clamping elastic rods 141.

The application of the elastic push-in locking assembly 1 to the display screen simplifies the installation and front maintenance of the display module, while simultaneously ensuring a stable connection during deformation under force, thereby avoiding maintenance difficulties and potential safety hazards.

The present disclosure effectively addresses the limitations of existing technologies, making it highly valuable for industrial applications.

The embodiments described above serve merely as illustrative examples of the principles and effects of the present disclosure, and are not intended to serve as limitations on the invention. Persons skilled in the art may modify or alter these embodiments without departing from the spirit and scope of the present disclosure. Therefore, any equivalent modifications or alterations made by those skilled in the art, which are consistent with the spirit and technical concepts disclosed in the present disclosure, shall still fall within the scope of the claims of the present disclosure.

## Claims

1. An elastic push-in locking assembly (1) used for detachably connecting a stationary body (2) with a mounting body (3), comprising:
a mounting column (11), wherein a first end of the mounting column (11) is connected to the stationary body (2),
a fixed concave platform (12) provided on the mounting body (3), and
an elastic clamping device, comprising a fixing part and an elastic clamping part integrally molded with the fixing part, wherein the elastic clamping part is adapted to a second end of the mounting column (11), the elastic clamping device is connected in the fixed concave platform (12) through the fixing part;
wherein upon the second end of the mounting column (11) being inserted into the elastic clamping part, the elastic clamping part is configured to have elastic deformation and form an elastic constraint on the second end of the mounting column (11), making the stationary body (2) and the mounting body (3) in a connected state;
wherein upon the mounting column (11) being pulled out, the stationary body (2) and the mounting body (3) are configured to be in a separated state;
wherein in the connected state, the elastic constraint of the elastic clamping device on the mounting column (11) is configured to allow a certain degree of displacement between the mounting column (11) and the elastic clamping part, reducing the impact of external forces on the stationary body (2) and the mounting body (3).

2. The elastic push-in locking assembly (1) according to claim 1, wherein the elastic clamping device is a claw device (13), the fixing part comprises a base (131) and a plurality of supporting feet (133), and the elastic clamping part forms an elastic clamping cavity (134) inside, wherein one end of each of the plurality of supporting feet (133) is fixed to the base (131), the other end extends toward the mounting body (3), and the plurality of supporting feet (133) is arranged symmetrically around the center of the base (131), wherein the elastic clamping part is fixed to the base (131) and extends toward the stationary body (2), wherein the claw device (13) is clamped into the fixed concave platform (12) through the supporting feet 133, one end of each of the plurality of supporting feet (133) is in contact with the bottom of the fixed concave platform (12) and is restricted by the side wall of the fixed concave platform (12), wherein the plurality of supporting feet (133) elevates the base (131) and creates a certain clearance between the base (131) and the bottom of the fixed concave platform (12), wherein when the second end of the mounting column (11) is inserted into the elastic clamping cavity (134), the stationary body (2) and the mounting body 3 are in a connected state, wherein when the mounting column (11) is pulled out, the stationary body (2) and the mounting body (3) are in a separated state.

3. The elastic push-in locking assembly (1) according to claim 2, wherein the elastic clamping cavity (134) comprises an accommodating space (134a), a tightening opening (134b) and a guiding opening (134c), wherein the second end of the mounting column (11) comprises a convex head (111) adapted to the accommodating space (134a) and a waisted groove (112) adapted to the tightening opening (134b), wherein when the second end of the mounting column (11) is inserted into the elastic clamping cavity (134), the convex head (111) abuts against the guiding opening (134c) and applies a certain pressure to the elastic clamping cavity (134), the tightening opening (134b) is propped open under the pressure, the convex head (111) passes through the tightening opening (134b) and is placed in the accommodation space (134a), and the tightening opening (134b) is sleeved on the waisted groove (112), wherein when the second end of the mounting column (11) is pulled out of the elastic clamping cavity (134), the convex head (111) applies pressure to the tightening opening (134b), the tightening opening (134b) is propped open, the convex head (111) passes through the tightening opening (134b), and the mounting column (11) is withdrawn from the cavity.

4. The elastic push-in locking assembly (1) according to claim 3, further comprising a plurality of elastic pieces (132), wherein one end of the plurality of elastic pieces (132) is fixed to the base (131), and the plurality of elastic pieces (132) is arranged symmetrically around the center of the base (131), wherein the elastic clamping cavity (134) is enclosed by the plurality of elastic pieces (132).

5. The elastic push-in locking assembly (1) according to claim 4, wherein each of the plurality of elastic pieces (132) comprises an accommodating part (132a) with one end fixed on the base (131) and a tightening part (132b) that has one end integrally molded into the other end of the accommodating part (132a) and extends inwardly toward the elastic clamping cavity (134), wherein a plurality of accommodating parts (132a) of the plurality of elastic pieces (132) encloses the accommodation space (134a) of the elastic clamping cavity (134), and a plurality of tightening parts (132b) of the plurality of elastic pieces (132) encloses the tightening opening (134b) of the elastic clamping cavity (134).

6. The elastic push-in locking assembly (1) according to claim 4, wherein each of the plurality of elastic pieces (132) further comprises a guiding part (132c), which is integrally molded at the other end of the tightening part (132b) and extends towards an outside of the elastic clamping cavity (134), and a plurality of the guiding part (132c) of the plurality of elastic pieces (132) encloses the guiding opening (134c) of the elastic clamping cavity (134).

7. The elastic push-in locking assembly (1) according to claim 2, wherein the outer contour of each of the plurality of supporting feet (133) is shaped like the Chinese character "JL", and a protrusion of each of the plurality of supporting feet (133) faces the stationary body (2), wherein when the claw device (13) is clamped into the fixed concave platform (12) by the plurality of supporting feet (133), the other end of the plurality of supporting feet (133) is compressed, and a side wall of the fixed concave platform (12) exerts an elastic force to the plurality of supporting feet (133) toward the center of the base (131), wherein the elastic forces received by the plurality of supporting feet (133) are balanced with each other, and these elastic forces are configured to make the connection between the plurality of supporting feet (133) and the fixed concave platform (12) more secure.

8. The elastic push-in locking assembly (1) according to claim 1, wherein the elastic clamping device is a rectangular elastic member (14) ,which comprises two clamping elastic rods (141) connected end to end and parallel to each other, wherein the elastic clamping part is a clamping seam (142) between the two clamping elastic rods (141), the fixing part is an end section of the rectangular elastic member (14),wherein two bayonets (121) are correspondingly provided on an inner wall of the fixed concave platform (12), and two ends of the rectangular elastic member (14) are respectively inserted into the bayonets (121), wherein when the second end of the mounting column (11) is inserted into the clamping seam (142), the mounting column (11) is configured to abut against the clamping elastic rods (141) and apply a certain pressure to the clamping elastic rods (141), the clamping seam (142) is configured to be propped open under the pressure, the mounting column (11) is configured to pass through and be limited within the clamping seam (142), and the mounting body (3) and the stationary body (2) are in a connected state, wherein when the mounting column (11) is pulled out of the clamping seam (142), the stationary body (2) and the mounting body (3) are in a separated state.

9. The elastic push-in locking assembly (1) according to claim 8, wherein the rectangular elastic member (14) is designed in an arch shape with its protruding part in contact with the inner wall of the fixed concave platform (12), and the rectangular elastic member (14) is limited by the inner wall of the fixed concave platform (12).

10. A display screen, comprising: a plurality of the elastic push-in locking assemblies (1) as in any one of claims 1 to 9,
one or more display modules, and an mounting chassis for mounting the display modules, wherein the elastic push-in locking assembly (1) is fixed to the display modules, and the display modules is detachably set on the mounting chassis through the elastic push-in locking assembly (1).
